Europäisches Patentamt

European Patent Office

Office européen des brevets

(11) Veröffentlichungsnummer: **0 418 489 A2**

# EUROPÄISCHE PATENTANMELDUNG

(21) Anmeldenummer: 90113575.6

(22) Anmeldetag: 16.07.90

(51) Int. Cl.5: **G02B 5/126**

(30) Priorität: 16.09.89 DE 3931022

(43) Veröffentlichungstag der Anmeldung:
27.03.91 Patentblatt 91/13

(84) Benannte Vertragsstaaten:
**CH FR GB IT LI SE**

(71) Anmelder: **Hommelwerke GmbH**
**Alte Tuttlinger Strasse 20**
**W-7730 VS-Schwenningen(DE)**

(72) Erfinder: **Ulbers, Gerd, Dr.**
**Lindenbaumstrasse 10**
**W-7730 VS-Weilersbach(DE)**

(74) Vertreter: **Leine, Sigurd, Dipl.-Ing. et al**
**LEINE & KÖNIG Patentanwälte**
**Burckhardtstrasse 1**
**W-3000 Hannover 1(DE)**

(54) Optischer Retroreflektor.

(57) Optischer Retroreflektor, insbesondere für interferometrische Zwecke. Er hat die Form einer Kugel aus optisch brechendem Material, dessen Brechungsindex wenigstens ungefähr, vorzugsweise genau 2 ist. Die Oberfläche der Kugel ist teilweise mit einer Schicht aus reflektierendem Material beschichtet, vorzugsweise bedampft. Der Retroreflektor läßt sich billig und mit hoher Oberflächengüte herstellen. Sein Reflexionsgrad ist groß.

## OPTISCHER RETROREFLEKTOR

Die Erfindung betrifft einen optischen Retroreflektor der im Oberbegriff des Anspruchs 1 genannten Art, insbesondere für interferometrische Zwecke.

Durch die DE-PS 36 30 887 ist ein optischer Retroreflektor der betreffenden Art bekannt. Er hat die Form einer Kugel und ist an einem Teil angebracht, dessen Bewegung oder Entfernung in bezug zu einem optischen Interferometer gemessen werden soll. Der Retroreflektor hat die Aufgabe, das von dem Interferometer kommende Licht in sich selbst zu dem Interferometer zurückzuwerfen. Das Licht wird auf die Rückseite der Kugel fokussiert und dort reflektiert. Der Reflexionsgrad ist dabei jedoch begrenzt.

Der Erfindung liegt die Aufgabe zugrunde, einen Retroreflektor der betreffenden Art zu schaffen, dessen Reflexionsfähigkeit, um ankommendes Licht in sich selbst zurücklaufen zu lassen, zu verbessern.

Die der Erfindung zugrundeliegende Aufgabe wird durch die im Kennzeichen des Anspruchs 1 angegebene Lehre gelöst, indem für den Retroreflektor Material mit einem Brechungsindex von ungefähr, vorzugsweise genau 2 gewählt ist. Durch einen solchen Brechungsindex wird die in sich selbst zurücklaufende Reflexion wesentlich verbessert.

Außerdem ist die Oberfläche der Kugel teilweise mit einem reflektierenden Material bedampft. Auf diese Weise läßt sich der Reflexionsgrad in die Nähe von 100 % erhöhen. Dabei ist es zweckmäßig, das reflektierende Material in Abhängigkeit von der Wellenlänge des zu reflektierenden Lichts zu wählen. Bei einer Wellenlänge des zu reflektierenden Lichts von 800 nm oder größer ist als Material Gold besonders zweckmäßig.

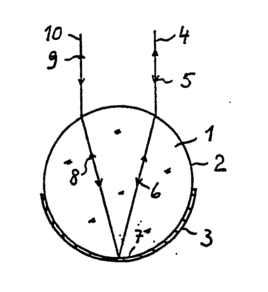

Anhand der Zeichnung soll die Erfindung an einem Ausführungsbeispiel näher erläutert werden.

Die Zeichnung zeigt eine Kugel 1 aus optisch brechendem Material. Ihre Oberfläche 2 ist ungefähr zur Hälfte mit einer Schicht 3 aus hochreflektierendem Material beschichtet. Bei einer Wellenlänge von $\lambda$ = 800 nm besteht dieses Material aus Gold.

Eine derartige Kugel läßt sich in einfacher Weise mit hoher Oberflächengüte herstellen und ist in der Herstellung wesentlich billiger als bekannte Tripelprismen, die einer komplizierten Bearbeitung bedürfen. Das Aufbringen der Schicht 3 erfolgt in einfacher Weise durch Bedampfen.

Die Wirkungsweise der Kugel ist durch einen schematisch angedeuteten Strahlengang verdeutlicht. Ein Lichtstrahl 4 trifft in Richtung eines Pfeiles 5 auf die Oberfläche 2 der Kugel 1 und wird dort gebrochen und in Richtung eines Pfeiles 6 auf eine Innenseite 7 der Oberfläche 2 der Kugel 1 bzw. auf die Schicht 3 geworfen und dort in Richtung eines Pfeiles 8 zurückgeworfen, bis er an der Oberfläche 2 wieder gebrochen und in Richtung eines Pfeiles 9 als Lichtstrahl 10 zurückgeworfen wird, der parallel zu dem Lichtstrahl 4 verläuft.

In umgekehrter Laufrichtung des Lichtes gelten die gleichen Verhältnisse. Sie sind durch nicht näher bezeichnete Pfeile angedeutet. Für zu den angedeuteten Lichtstrahlen 4 und 10 parallele Lichtstrahlen, die an anderen Stellen auf die Oberfläche 2 auftreffen, gelten die gleichen optischen Verhältnisse, so daß im wesentlichen das gesamte, auf die Kugel 1 auftreffende Licht in sich selbst zurückgeworfen wird.

Wird die Kugel 1 in nicht gezeigter Weise in den Bereich der Schicht 3 auf die Oberfläche eines sich bewegenden Körpers, z.B. einem Meßstößel eines Längenmeßtasters, aufgebracht, und wird die Kugel 1 mit Licht aus einem optischen Interferometer bestrahlt, so wirft die Kugel 1 das Licht in dieses optische Interferometer zurück, wo dann in bekannter Weise durch Interferenzmessung die Bewegung der Kugel und damit auch der Oberfläche, an der sie angebracht ist, bestimmt werden kann.

## Ansprüche

1. Optischer Retroreflektor, insbesondere für interferometrische Zwecke, in Form einer Kugel aus optisch brechendem Material, **dadurch gekennzeichnet**, daß das Material einen Brechungsindex von ungefähr, vorzugsweise genau 2 hat und daß die Oberfläche (2) der Kugel (1) teilweise mit einer Schicht (3) aus reflektierendem Material beschichtet, vorzugsweise bedampft, ist.

2. Optischer Retroreflektor nach Anspruch 1, **dadurch gekennzeichnet**, daß das reflektierende Material in Abhängigkeit von der Wellenlänge des zu reflektierenden Lichts gewählt ist.

3. Optischer Retroreflektor nach Anspruch 2, **dadurch gekennzeichnet**, daß das Material bei einer Wellenlänge des zu reflektierenden Lichts von ungefähr 800 nm oder größer Gold ist.